# EUROPÄISCHE PATENTANMELDUNG

(11) **EP 2 642 097 A1**
(43) Veröffentlichungstag der Anmeldung: **25.09.2013**
(21) Anmeldenummer: 12160546.3
(22) Anmeldetag: 21.03.2012
(51) Int. Cl.: F02C 3/34

(54) **Verfahren zum Betrieb einer Gasturbine sowie Gasturbine zur Durchführung des Verfahrens**

(71) Anmelder: Alstom Technology Ltd, 5400 Baden (CH)
(72) Erfinder: Guethe, Felix, 4056 Basel (CH); Benz, Eribert, 5413 Birmenstorf (CH); Graf, Frank, 5415 Nussbaumen (CH)

(57) **Zusammenfassung**

Bei einem Verfahren zum Betrieb einer Gasturbine (11) wird aus den Abgasen der Gasturbine (11) NOx mittels einer selektiven Katalyse-Vorrichtung (14) unter Zugabe von NH3 entfernt.

Eine extrem geringer NOx-Gehalt bei gleichzeitig sparsamem Verbrauch von NH3 und Vermeidung von NH3 im Abgas wird dadurch erreicht, dass der NOx-Gehalt der Abgase durch eine geregelte Rückführung eines Teils der Abgase bei wechselnden Betriebsbedingungen der Gasturbine (11) auf einem konstanten Niveau gehalten wird, und die Zugabe des NH3 in der selektiven Katalyse-Vorrichtung (14) auf das konstante NOx-Niveau eingestellt wird.

## Beschreibung

### Technisches Gebiet

Die vorliegende Erfindung bezieht sich auf das Gebiet der Gasturbinen. Sie betrifft ein Verfahren zum Betrieb einer Gasturbine gemäss dem Oberbegriff des Anspruchs 1. Sie betrifft weiterhin eine Gasturbine zur Durchführung des Verfahrens sowie ein Kombikraftwerk mit einer Gasturbine.

### Stand der Technik

Um die Leistung und den Wirkungsgrad von Gasturbinen weiter zu erhöhen, werden die Verbrennungstemperaturen weiter angehoben. Höhere Verbrennungstemperaturen können zu einem höheren Gehalt an unerwünschten NOx im Abgas führen. Die Reduzierung des NOx-Gehaltes im Abgas durch eine verbesserte Verbrennungstechnologie hat jedoch Grenzen im Bezug auf Mischung, Leckage und Verweildauer des Brennstoffes. Eine weitere Reduzierung durch die Verbrennungstechnologie erscheint nicht möglich.

Es muss daher darüber nachgedacht werden, wie der NOx-Gehalt im Abgas durch nach der Verbrennung einsetzende Verfahren reduziert werden kann.

Aus dem Artikel von F. Güthe et al. "Flue Gas Recirculation of the Alstom Sequential Gas Turbine Combustor Tested at High Pressure", Proc. ASME Turbo Expo 2011, June 6-10, 2011, Vancouver, Canada, GT2011-45379, ist es bekannt (siehe die dortige Fig. 5), dass der NOx-Gehalt im Abgas einer Gasturbine unter bestimmten Bedingungen durch eine Abgasrückführung (Flue Gas Recirculation FGR) stark beeinflusst bzw. reduziert werden kann.

Aus der Druckschrift US 2009/0284013 A1 sind ein Verfahren und eine Vorrichtung bekannt geworden, bei denen der NOx-Gehalt im Abgas einer Gasturbine eines Kombikraftwerkes dadurch reduziert wird, dass einerseits eine Reduktion durch Abgasrückführung erzielt wird und andererseits im Abgasstrom zum Abhitzedampferzeuger ein trockener 3-Wege-Katalysator angeordnet wird. Diese Art des Katalysators vermeidet zwar den Einsatz von NH3 und das damit verbundene Problem der Verunreinigung der Abgase mit NH3 ("NH3 slipping"), ist jedoch wegen des verwendeten Katalysator-Materials ausserordentlich aufwändig.

### Darstellung der Erfindung

Es ist daher eine Aufgabe der Erfindung, ein Verfahren zum Betrieb einer Gasturbine anzugeben, welches mit dem Einsatz von NH3 arbeitet, die damit verbundenen Probleme jedoch weit gehend vermeidet.

Es ist weiterhin eine Aufgabe der Erfindung, eine Gasturbine zu Durchführung des Verfahrens anzugeben.

Diese und andere Aufgaben werden durch die Gesamtheit der Merkmale der Ansprüche 1 und 7 gelöst.

Bei dem erfindungsgemässen Verfahren wird aus den Abgasen der Gasturbine das NOx mittels einer selektiven Katalyse-Vorrichtung unter Zugabe von NH3 entfernt, wobei der NOx-Gehalt der Abgase durch eine geregelte Rückführung eines Teils der Abgase bei wechselnden Betriebsbedingungen der Gasturbine auf einem konstanten Niveau gehalten wird, und die Zugabe des NH3 in der selektiven Katalyse-Vorrichtung auf das konstante NOx-Niveau eingestellt wird.

Hierdurch ist es möglich, auch unter sich ändernden Betriebsbedingungen für die selektive Katalyse immer genau diejenige Menge NH3 zur Verfügung zu stellen, die zur Entfernung des NOx benötigt wird.

Eine Ausgestaltung des Verfahrens nach der Erfindung ist dadurch gekennzeichnet, dass der NOx-Gehalt der aus der Gasturbine kommenden Abgase durch die Abgasrückführung gleichzeitig dauerhaft abgesenkt wird. Dadurch kann das NOx noch effektiver aus dem Abgas entfernt resp. ausgeschieden werden.

Eine andere Ausgestaltung des Verfahrens nach der Erfindung ist dadurch gekennzeichnet, dass die Abgase vor der selektiven katalytischen Reduktion in der selektiven Katalyse-Vorrichtung durch eine Kühlvorrichtung mit einem Direktkontakt-Kühler geleitet werden. Durch den damit verbundenen Wascheffekt kann die Effektivität der NOx-Entfernung um 10-30% verbessert werden.

Insbesondere kann dabei zur Optimierung des Wascheffekts in der Kühlvorrichtung der pH-Wert und die Zugabe von Oxidationsmitteln geregelt werden.

Die erfindungsgemässe Gasturbine zur Durchführung des Verfahrens nach der Erfindung weist eine mit NH3 arbeitende nachgeschaltete selektive Katalyse-Vorrichtung zur Entfernung von NOx aus dem Abgas der Gasturbine auf. Sie ist dadurch gekennzeichnet, dass die Gasturbine mit einer geregelten Abgasrückführung ausgestattet ist.

Eine Ausgestaltung der erfindungsgemässen Gasturbine ist dadurch gekennzeichnet, dass die Abgasrückführung zur Rückführung von Abgas auf den Eingang der Gasturbine ausgebildet ist.

Eine andere Ausgestaltung der erfindungsgemässen Gasturbine ist dadurch gekennzeichnet, dass vor der selektiven Katalyse-Vorrichtung eine Kühlvorrichtung mit einem Direktkontakt-Kühler angeordnet ist.

Insbesondere ist die Kühlvorrichtung zum Waschen des Abgases ausgebildet.

Eine andere Ausgestaltung der erfindungsgemässen Gasturbine ist dadurch gekennzeichnet, dass eine Steuerung vorgesehen ist, welche mit der Abgasrückführung verbunden ist und die Abgasrückführung nach Massgabe des NOx-Gehaltes im Abgas regelt.

Eine andere Ausgestaltung der erfindungsgemässen Gasturbine ist dadurch gekennzeichnet, dass die Gasturbine mit einer sequentiellen Verbrennung ausgestattet ist. Eine solche Gasturbine geht beispielsweise aus EP 0 620 362 B1 hervor, wobei diese Druckschrift einen integrierenden Bestandteil vorliegender Beschreibung bildet.

Zu der Erfindung gehört auch ein Kombikraftwerk mit einer erfindungsgemässen Gasturbine.

### Kurze Erläuterung der Figuren

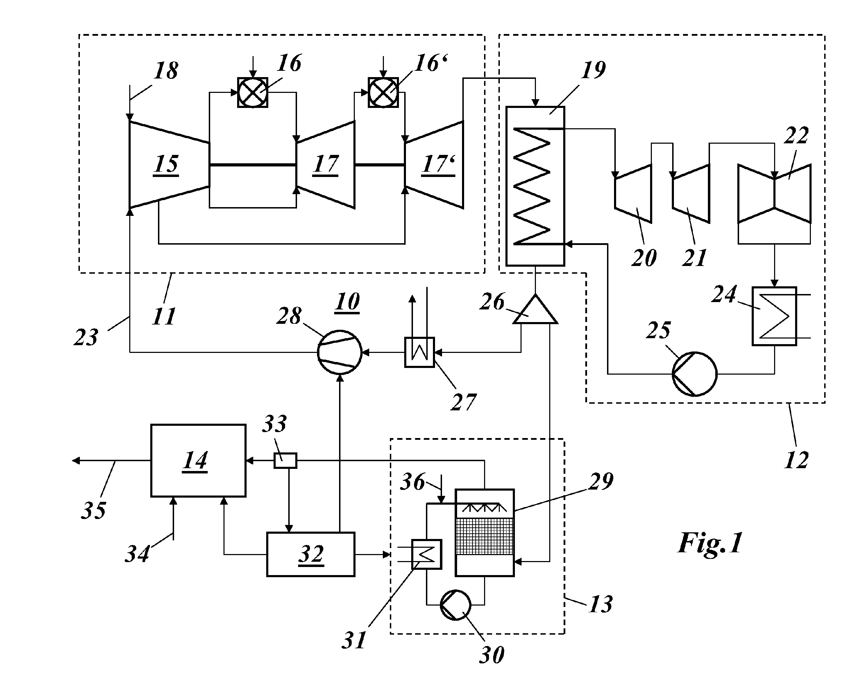

Die Erfindung soll nachfolgend anhand von Ausführungsbeispielen im Zusammenhang mit der Zeichnung näher erläutert werden. Es zeigt
Fig. 1 in einem vereinfachten Anlagenschema ein Kombikraftwerk mit einer Gasturbine gemäss einem Ausführungsbeispiel der Erfindung.

### Wege zur Ausführung der Erfindung

In Fig. 1 ist in einem vereinfachten Anlagenschema ein Kombikraftwerk 10 mit einer Gasturbine 11 gemäss einem Ausführungsbeispiel der Erfindung dargestellt. Das Kombikraftwerk 10 umfasst neben der Gasturbine 11 einen Wasser/Dampf-Kreislauf 12, dessen Abhitzedampferzeuger 19 vom Abgas der Gasturbine 11 durchströmt wird und mit der dem Abgas entnommenen Wärme Dampf für eine Dampfturbinen-Anordnung mit einer Hochdruck-Dampfturbine 20, einer Mitteldruck-Dampfturbine 21 und einer Niederdruck-Dampfturbine 22 erzeugt. Der aus der Niederdruck-Dampfturbine 22 austretende Dampf wird in einem Kondensator 24 kondensiert. Das anfallende Wasser wird mittels einer Pumpe 25 im Kreislauf zurück zum Abhitzedampferzeuger 19 gepumpt.

Das Abgas wird nach dem Durchströmen des Abhitzedampferzeugers 19 in einer Abzweigung 26 aufgeteilt. Der eine Teil wird in einer Abgasrückleitung 23 über einen Kühler 27 mittels eines Gebläses 28 zum Eingang der Gasturbine 11 zurückgeführt und tritt dort - zusammen mit der für die Verbrennung notwendigen Umgebungsluft 18 - in den Verdichter 15 der Gasturbine 11 ein.

Der andere Teil des Abgases gelangt über eine Kühlvorrichtung 13 in eine selektive Katalyse-Vorrichtung 14, in der durch Zugabe von NH₃ (34) NOx in N₂ umgewandelt und so aus dem Abgas entfernt wird. Das resultierende Abgas 35 kann dann nach aussen abgegeben werden.

Die Kühlvorrichtung 13 umfasst einen Direktkontakt-Kühler (DCC) 29, in welchem Wasser, welches in einem geschlossenen Kreislauf zirkuliert und mittels einer Pumpe 30 durch einen Wärmetauscher 31 zum Direktkontakt-Kühler 29 zurück gepumpt wird, in den Abgasstrom eingesprüht wird und so den Abgasstrom kühlt. Durch den engen Kontakt zwischen versprühtem Wasser und dem Abgas kann gleichzeitig ein Wascheffekt erzeugt werden, der die Entfernung des NOx begünstigt. Hierzu können dem Wasserkreislauf kontrolliert Oxidationsmittel 36 wie z.B. NaOCl oder O₃ oder H₂O₂ zugesetzt werden. Weiterhin kann der pH-Wert im Kreislauf kontrolliert werden.

Nach dem Durchlaufen der Kühlvorrichtung 13 gelangt das Abgas in die selektive Katalyse-Vorrichtung 14, wo es mit Ammoniak 34 in intensiven Kontakt gebracht wird.

Wesentlich für die Erfindung ist die Kombination von Abgasrückführung (FGR) und selektiver katalytischer Reduktion (Selective Catalytic Reduction SCR), wobei die Abgasrückführung so geregelt wird, dass auch bei wechselnden Betriebsbedingungen der Gasturbine 11 ein konstanter niedriger NOx-Gehalt im Abgas erzielt wird. Wenn ein solcher konstanter niedriger NOx-Gehalt im Abgas eingehalten wird, kann einerseits NH₃ eingespart werden, andererseits kann die Zugabe von NH₃ in der selektiven Katalyse-Vorrichtung 14 auf den eingeregelten Wert des NOx-Gehalts genau abgestimmt werden, so dass eine Verunreinigung der Abgase 35 mit NH₃ stark reduziert oder ganz vermieden wird. Auf diese Weise wird im Abgas 35 ein extrem niedriger NOx-Gehalt realisiert und der Verbrauch von und die Verunreinigung mit NH3 gering gehalten.

Für die Durchführung des Verfahrens ist eine Steuerung 32 vorgesehen, die einerseits - z.B. über das Gebläse 28 - die Abgasrückführung regelt und andererseits - wenn notwendig - die Zugabe des NH₃ in der selektiven Katalyse-Vorrichtung 14 einstellt. Des Weiteren kann von der Steuerung 32 der Wascheffekt in der Kühlvorrichtung 13 gesteuert werden. Veränderungen des NOx-Gehaltes im Abgas können durch einen NOx-Sensor 33 detektiert werden, der beispielsweise vor dem Eingang der selektiven Katalyse-Vorrichtung 14 angeordnet ist und Messwerte an die Steuerung 32 abgibt.

Vorteilhaft im Bezug auf den NOx-Gehalt ist es auch, wenn die Gasturbine 11 mit einer sequenziellen Verbrennung ausgestattet ist und zwei Brennkammern 16 und 16' sowie zwei Turbinen 17 und 17' umfasst.

Insgesamt zeichnet sich die Erfindung durch die folgenden Merkmale und Vorteile aus:
● verwendet wird eine Kombination aus selektiver katalytischer Reduktion (SCR) und Abgasrückführung (FGR);
● die kostspielige Verunreinigung des Abgases mit Ammoniak wird reduziert beziehungsweise vermieden;
● die Abgasrückführung wird so gesteuert, dass auch bei unterschiedlichen Betriebsbedingungen der Gasturbine ein konstanter NOx-Gehalt im Abgas aufrechterhalten wird;
● die Zugabe von Ammoniak zur selektiven katalytischen Reduktion wird auf den konstant gehaltenen NOx-Gehalt im Abgas abgestimmt;
● zusätzlich kann das Verhältnis von NO zu NO₂ im Hinblick auf die selektive katalytische Reduktion überwacht werden;
● der Wascheffekt im Direktkontakt-Kühler 29 kann die Effektivität der NOx-Entfernung je nach Verhältnis NO/NO₂ und Betrieb des Direktkontakt-Kühlers bezüglich pH-Wert und Oxidationsmittelzusatz um 10-30% steigern.

Die Anordnung gemäss Fig. 1 schliesst auch eine Variante mit ein, in welcher der Direktkontaktkühler (DCC) 29 vor der Auftrennung der Abgase angeordnet ist, dergestalt, dass dieser den Gesamtabgasmassenstrom behandeln kann.

### Bezugszeichenliste

- 10: Kombikraftwerk
- 11: Gasturbine
- 12: Wasser/Dampf-Kreislauf
- 13: Kühlvorrichtung
- 14: selektive Katalyse-Vorrichtung
- 15: Verdichter
- 16,16': Brennkammer
- 17,17': Turbine
- 18: Umgebungsluft
- 19: Abhitzedampferzeuger
- 20: Hochdruck-Dampfturbine
- 21: Mitteldruck-Dampfturbine
- 22: Niederdruck-Dampfturbine
- 23: Abgasrückleitung
- 24: Kondensator
- 25: Pumpe
- 26: Abzweigung
- 27: Kühler
- 28: Gebläse
- 29: Direktkontakt-Kühler
- 30: Pumpe
- 31: Wärmetauscher
- 32: Steuerung
- 33: NOx-Sensor
- 34: NH3
- 35: Abgas
- 36: Oxidationsmittel

## Patentansprüche

1. Verfahren zum Betrieb einer Gasturbine (11), bei welchem Verfahren aus den Abgasen der Gasturbine (11) NOx mittels einer selektiven Katalyse-Vorrichtung (14) unter Zugabe von NH₃ entfernt wird, **dadurch gekennzeichnet, dass** der NOx-Gehalt der Abgase durch eine geregelte Rückführung eines Teils der Abgase bei wechselnden Betriebsbedingungen der Gasturbine (11) auf einem konstanten Niveau gehalten wird, und die Zugabe des NH₃ in der selektiven Katalyse-Vorrichtung (14) auf das konstante NOx-Niveau eingestellt wird.

2. Verfahren nach Anspruch 1, **dadurch gekennzeichnet, dass** der NOx-Gehalt der aus der Gasturbine (11) stammenden resp. abgeführten Abgase durch die Abgasrückführung gleichzeitig dauerhaft abgesenkt wird.

3. Verfahren nach Anspruch 1 oder 2, **dadurch gekennzeichnet, dass** die Abgase vor der selektiven katalytischen Reduktion in der selektiven Katalyse-Vorrichtung (14) durch eine Kühlvorrichtung (13) geleitet werden.

4. Verfahren nach Anspruch 3, **dadurch gekennzeichnet, dass** die Kühlvorrichtung (13) mit einem Direktkontaktkühler (29) betrieben wird.

5. Verfahren nach Anspruch 3, **dadurch gekennzeichnet, dass** in der Kühlvorrichtung (14) der pH-Wert und die Zugabe von Additiven, von Oxidationsmitteln (36), geregelt wird.

6. Verfahren nach Anspruch 5, **dadurch gekennzeichnet, dass** als Oxidationsmittel NaOCl und/oder O₃ und/oder H₂O₂ eingesetzt wird.

7. Verfahren nach einem der Ansprüche 1-6, **dadurch gekennzeichnet, dass** der Direktkontaktkühler (29) vor der Auftrennung der Abgase angeordnet ist, und in Wirkverbindung mit Gesamtabgasmassenstrom steht.

8. Gasturbine (11) zur Durchführung des Verfahrens nach einem der Ansprüche 1-4, welche Gasturbine (11) eine mit NH₃ arbeitende nachgeschaltete selektive Katalyse-Vorrichtung (14) zur Entfernung von NOx aus dem Abgas der Gasturbine (11) aufweist, **dadurch gekennzeichnet, dass** die Gasturbine (11) mit einer geregelten Abgasrückführung (23, 26, 27, 28) ausgestattet ist.

9. Gasturbine nach Anspruch 8, **dadurch gekennzeichnet, dass** die Abgasrückführung (23, 26, 27, 28) zur Rückführung von Abgas auf den Eingang der Gasturbine (11) ausgebildet ist.

10. Gasturbine nach Anspruch 8 oder 9, **dadurch gekennzeichnet, dass** vor der selektiven Katalyse-Vorrichtung (14) eine Kühlvorrichtung (13) mit einem Direktkontakt-Kühler (29) angeordnet ist.

11. Gasturbine nach Anspruch 10, **dadurch gekennzeichnet, dass** die Kühlvorrichtung (13) zum Waschen des Abgases ausgebildet ist.

12. Gasturbine nach einem der Ansprüche 8-11, **dadurch gekennzeichnet, dass** eine Steuerung (32) vorgesehen ist, welche mit der Abgasrückführung (23, 26, 27, 28) verbunden ist und die Abgasrückführung nach Massgabe des NOx-Gehaltes im Abgas regelt.

13. Gasturbine nach einem der Ansprüche 8-12, **dadurch gekennzeichnet, dass** die Gasturbine (11) mit einer sequentiellen Verbrennung (16, 16', 17, 17') ausgestattet ist.

14. Kombikraftwerk (10) mit einer Gasturbine (11) nach einem der Ansprüche 8-13.
